Europäisches Patentamt

European Patent Office

Office européen des brevets

(19)

(11) **EP 1 288 095 A2**

(12) **EUROPÄISCHE PATENTANMELDUNG**

(43) Veröffentlichungstag:
05.03.2003 Patentblatt 2003/10

(51) Int Cl.⁷: **B60T 17/22**

(21) Anmeldenummer: 02019436.1

(22) Anmeldetag: 30.08.2002

| | |
|---|---|
| (84) Benannte Vertragsstaaten:<br>**AT BE BG CH CY CZ DE DK EE ES FI FR GB GR**<br>**IE IT LI LU MC NL PT SE SK TR**<br>Benannte Erstreckungsstaaten:<br>**AL LT LV MK RO SI**<br><br>(30) Priorität: **31.08.2001 DE 10142790**<br><br>(71) Anmelder:<br>• **Winkle, Günther, Dipl.-Ing.(TU)**<br>**80335 München (DE)**<br>• **Alfter, Reinhold, Dipl.-Ing.**<br>**52372 Kreuzau (DE)** | (72) Erfinder:<br>• **Winkle, Günther, Dipl.-Ing.(TU)**<br>**80335 München (DE)**<br>• **Alfter, Reinhold, Dipl.-Ing.**<br>**52372 Kreuzau (DE)**<br><br>(74) Vertreter: **Thoma, Michael et al**<br>**Lorenz - Seidler - Gossel,**<br>**Widenmayerstrasse 23**<br>**80538 München (DE)** |

(54) **Bremsdiagnose für Schienen- und Strassenfahrzeuge**

(57) Die vorliegende Erfindung betrifft ein Verfahren und eine Vorrichtung zur Diagnose von Funktionsstörungen und/oder des Verschleißzustands der aktiven Bauteile einer Bremsanlage eines Fahrzeugs, insbesondere Schienenfahrzeugs, welches ein Druckleitungsnetz (1) mit mehreren darin angeordneten aktiven Bauteilen aufweist. Erfindungsgemäß werden die aktiven Bauteile, insbesondere die Ventile (3,4,5,6,7,8,9) der Bremsanlage, im eingebauten Zustand geprüft, wobei eine Ansteuergröße für die Bremsanlage bzw. die aktiven Bauteile vorgegeben wird, wobei der sich in den Druckleitungen (2) einstellende Druck jeweils an Knotenpunkten (P1,P2,...,Pn) des Druckleitungsnetzes (1) stromauf und stromab eines jeden zu prüfenden aktiven Bauteils erfasst wird, wobei ein Vergleich der erfassten Druckwerte und/oder daraus abgeleitete Werte mit Grenzwerten und eine Diagnose von Funktionsstörungen und/oder des Verschleißzustands anhand des Vergleichs durchgeführt werden, und wobei die Grenzwerte in Abhängigkeit der Ansteuergröße vorgegeben werden. Insbesondere wird die Diagnose anhand eines Signalmusters durchgeführt, das durch Abarbeitung verschiedener Bremsprogramme erhalten wird, bei denen verschiedene Ansteuergrößen für die Bremsanlage bzw. die aktiven Bauteile vorgegeben werden und in Abhängigkeit der verschiedenen Ansteuergrößen verschiedene Grenzwerte für den durchzuführenden Vergleich vorgegeben werden.

Prinzip BremsdiagnoseSystem (Triebfahrzeug)    Fig. 1

EP 1 288 095 A2

**Beschreibung**

Die vorliegende Erfindung betrifft ein Verfahren sowie eine Vorrichtung zur Diagnose von Funktionsstörungen und/oder Verschleißzuständen der aktiven Bauteile einer Bremsanlage eines Fahrzeugs, insbesondere Schienenfahrzeugs, das ein Druckleitungsnetz mit mehreren darin angeordneten aktiven Bauteilen aufweist, wobei die aktiven Bauteile, insbesondere die Ventile der Bremsanlage, im eingebauten Zustand geprüft werden.

In den Bremsanlagen von Schienenfahrzeugen wie Triebfahrzeuge, Reisezugwägen oder Güterwägen werden eine Vielzahl von pneumatischen und elektropneumatischen Ventilen eingesetzt. Ähnliches gilt, wenn auch im verringerten Umfang, für Straßenfahrzeuge wie Omnibusse und Lastkraftwagen mit pneumatischer Bremse. Diese aktiven Bauteile, die auch Hähne umfassen können, müssen zusammen mit den mechanischen Komponenten wie Bremsgestängen, Bremszylinder etc. regelmäßig in sogenannten Bremsrevisionen mit einem unterschiedlichen Untersuchungsumfang überprüft werden. Für Regionaltriebfahrzeuge sind z. B. jährlich eine Bremsrevision vom Typ BR 1 und alle sechs Jahre eine Bremsrevision vom Typ BR 3 vorgeschrieben. Insbesondere zu der Durchführung der letztgenannten BR 3-Prüfung ist der prophylaktische Ausbau und die Überholung aller pneumatischen Komponenten unabhängig von dem jeweiligen Verschleißzustand notwendig. Der zeitliche sowie der Kostenaufwand einer solchen Bremsrevision ist beträchtlich.

Aus der DE 33 37 800 C2 ist eine mehrkreisig angesteuerte Druckmittelbremsanlage bekannt, die ein Druckleitungsnetz mit mehreren Ventilen aufweist, wobei die Ventile über eine Betriebsbremseinrichtung sowohl mit einem elektrischen Bremssignal als auch mit einem pneumatischen Bremssignal angesteuert werden. Mittels einem Eingangsdrucksensor, der am Eingang des Druckmittelkreises stromauf sämtlicher Ventile angeordnet ist, wird das pneumatische Bremssignal überwacht. Mittels eines Ausgangssensors wird der sich am Ausgang des Druckleitungsnetzes stromab der Ventile einstellende Bremsdruck überwacht. Anhand der Drucksignale der beiden Drucksensoren wird die Verfügbarkeit der von der Betriebsbremseinrichtung zugeführten pneumatischen und elektrischen Steuersignale überwacht. Ergibt die Überwachung einen Defekt einer der beiden Steuerkreise, wird die Bremsanlage auf den jeweils anderen Steuerkreis umgeschaltet. Gleichzeitig werden die Signale der beiden Drucksensoren zur Regelung des Bremsdrucks verwendet, wobei in Verbindung mit der Elektronik ein bekannter Regelkreis aufgebaut wird.

Mit dieser bekannten Überwachung einer zweikreisig ansteuerbaren Bremsanlage kann zwar ein Defekt der beiden Steuerkreise erkannt und angezeigt werden. Damit kann zwar erkannt werden, ob die gesamte Anordnung der Ventile im Druckleitungsnetz insgesamt korrekt arbeitet. Eine Lokalisierung des Defekts innerhalb der gesamten Anordnung der Ventile ist jedoch nicht möglich. Konkret kann nicht bestimmt werden, welches der Ventile defekt ist bzw. einen nicht mehr tolerierbaren Verschleiß erreicht hat, so dass ein individueller Austausch nur eines einzelnen defekten Ventils nicht möglich ist.

Der vorliegenden Erfindung liegt daher die Aufgabe zugrunde, ein verbessertes Diagnoseverfahren bzw. eine verbesserte Diagnosevorrichtung der eingangs genannten Art zu schaffen, womit die aktiven Bauteile von Fahrzeugbremsanlagen im eingebauten Zustand effizient individuell überprüft werden können, um den zeitlichen und den Kostenaufwand einer herkömmlichen Bremsrevision zumindest für den pneumatischen und elektropneumatischen Anteil der Bremskomponenten drastisch zu reduzieren. Insbesondere sollen Fehlfunktionen und Verschleißzustände der aktiven Bauteile, die zu einer Bremsstörung führen, erkannt werden, der prophylaktische Austausch der Bauteile vermieden und die Lebenserwartung der Bauteile besser ausgeschöpft werden.

In verfahrenstechnischer Hinsicht wird die genannte Aufgabe durch ein Verfahren gemäß Patentanspruch 1 gelöst. In vorrichtungstechnischer Hinsicht wird die genannte Aufgabe durch eine Vorrichtung gemäß Patentanspruch 6 gelöst. Vorteilhafte Ausgestaltungen der Erfindung sind Gegenstand der weiteren Ansprüche.

Das automatische Diagnoseverfahren, bei dem die aktiven Bauteile, insbesondere die Ventile der Bremsanlage im eingebauten Zustand geprüft werden, zeichnet sich also erfindungsgemäß dadurch aus, dass eine Ansteuergröße für die Bremsanlage bzw. die aktiven Bauteile vorgegeben wird, was z. B. durch einfache Betätigung des Bremshebels des Fahrzeugs erfolgen kann, dass der sich einstellende Druck in den Druckleitungen jeweils an Knotenpunkten des Druckleitungsnetzes stromauf und stromab eines jeden zu prüfenden aktiven Bauteils erfasst wird, dass die erfassten Druckwerte und/oder daraus abgeleitete Werte mit Grenzwerten verglichen werden und anhand dieses Vergleichs Funktionsstörungen und/oder der Alterungszustand eines jeden Bauteils diagnostiziert werden, wobei die Grenzwerte in Abhängigkeit der Ansteuergröße vorgegeben werden. Anstatt die aktiven Komponenten auszubauen, werden also jeweils vor und nach den aktiven Bauteilen Anschlüsse für Drucktransmitter geschaffen, mit Hilfe derer sich in Abhängigkeit der vorgegebenen Ansteuergröße der Bremsanlage einstellende Druckwerte im Druckleitungssystem erfassen lassen. Die Erfindung geht von der Erkenntnis aus, dass sich bei funktionierenden Ventilen an den Knotenpunkten im Druckleitungsnetz bestimmte Druckwerte einstellen bzw. umgekehrt, dass falsche Drücke auf Fehlfunktionen der Bauteile zurückzuführen sind. Insbesondere wird bei falschen, außerhalb eines vorgegebenen Bereichs liegenden Werten des Drucks stromauf und stromab eines aktiven Bauteils bzw. einer daraus abgeleiteten Größe angenommen, dass bei dem entsprechenden aktiven Bauteil eine Funktionsstörung vorliegt.

Anstelle einer bzw. ergänzend zu einer Einzelteilprüfung kann auch eine Überprüfung des Systemzustands erfolgen, anhand dessen sodann mittels einer gespeicherten Fehlererkennungslogik die Bauteile einzeln diagnostiziert werden, d. h. Funktionsstörungen und/oder der Verschleißzustand der aktiven Bauteile einzeln bestimmt werden. Dieser Ansatz geht von der Erkenntnis aus, daß Funktionsstörungen einzelner Bauteile nicht nur unmittelbar vor und nach dem Bauteil eine Veränderung der Druckwerte bzw. der Stromwerte mit sich bringt, sondern daß sich solche individuellen Fehler bzw. Abnutzungserscheinungen auf den gesamten Systemzustand auswirken. Werden nunmehr aus der Gesamtheit der an den Knotenpunkten erfaßten Istwerte von Druck und/oder Strom deren Abweichungen gegenüber einem vorgegebenen Systemzustand ermittelt, können mittels der vorgesehenen Fehlererkennungslogik individuelle Funktionsstörungen und/oder der Verschleißzustand einzelner Bauteile bestimmt werden. Mit Hilfe dieser ganzheitlichen Betrachtung können Störungen einzelner Bauteile sicher bestimmt werden, so daß der Ausbau sämtlicher Bauteile vermieden und nur die Teile, die tatsächlich schadhaft sind, ausgetauscht werden müssen.

Bei der Feststellung einer Funktionsstörung kann also gezielt das jeweilige Bauteil ausgetauscht werden, ohne dass sämtliche Komponenten der Bremsanlage ausgebaut werden müssten. Hierdurch kann eine beträchtliche Verminderung des zeitlichen und Kostenaufwands einer Bremsrevision erreicht werden.

In Weiterbildung der Erfindung werden verschiedene Bremsprogramme gefahren, bei denen verschiedene Ansteuergrößen für die Bremsanlage bzw. die aktiven Bauteile vorgegeben werden, wobei in Abhängigkeit der verschiedenen Ansteuergrößen verschiedene Grenzwerte für den von der Vergleichseinrichtung durchzuführenden Vergleich vorgegeben werden. Als Bremsprogramme können dabei z. B. durch entsprechende Einstellung des Bremshebels des Fahrzeugs die relevanten Bremsfunktionen des jeweiligen Fahrzeugs, also Betriebsbremsung der Stufen 1 - 7, Haltebremse, Parkbremse, Fahrernotbremsung, Fahrgastnotbremsung und Notbremsschleife, durchfahren werden. Eine solche manuelle Bedienung der Bremsventile vom Bremshebel des Fahrzeugs her hat den Vorteil, dass damit auch die elektronische Bremsansteuerung und die Bedienungsventile in ihrer Funktion mit geprüft werden. Durch das Durchfahren verschiedener Bremsprogramme, was manuell und/oder programmgesteuert erfolgen kann, ergibt sich für alle aktiven Bauteile der Bremsanlage ein Signalmuster, anhand dessen die Diagnose von Funktionsstörungen erstellt wird.

In Weiterbildung der Erfindung kann eine Einzelkomponentenprüfung vorgesehen sein. Die einzelnen aktiven Bauteile werden gesondert angesteuert, wobei entsprechend der Einzelansteuerung gesonderte Grenzwerte vorgegeben werden, anhand derer die Vergleiche zwischen den erfassten Druckwerten bzw. daraus abgeleiteter Werte und den Grenzwerten durchgeführt werden. Die Einzelprüfung der Bremsanlagenbauteile kann von Hand oder durch den Rechner der Bremsdiagnosevorrichtung gesteuert werden.

Verschiedene Druckwerte können erfasst werden. In Weiterbildung der Erfindung können alternativ oder zusätzlich zu momentanen Druckwerten die zeitlichen Verläufe der Drücke an den Knotenpunkten erfasst werden und anhand des jeweiligen zeitlichen Verlaufs und/oder daraus abgeleiteter Werte ein Vergleich mit den vorgegebenen Grenzwerten durchgeführt werden. Insbesondere kann geprüft werden, ob der jeweilige Druck an einem Knotenpunkt schnell genug ansteigt bzw. abfällt, d. h. ob das jeweilige Ventil schnell genug öffnet bzw. schließt.

Mit dem vorgeschlagenen Verfahren können Ventile verschiedenen Typs geprüft werden. Bei der Prüfung von Magnetventilen kann zusätzlich zur Erfassung der Druckwerte stromauf und stromab des jeweiligen Magnetventils auch der Ansteuerstrom, mit dem das Magnetventil angesteuert wird, erfasst und/oder vorgegeben werden. Aus den für das jeweilige Magnetventil erfassten Druckwerten und den Stromwerten wird vorteilhafterweise ein Kennwert gebildet, der mit einem vorgegebenen Grenzwert verglichen wird. Vorzugsweise kann anhand des so gebildeten Kennwerts eine Alterungsprüfung durchgeführt werden. Als Stromwert kann ein absoluter Wert, aber auch der zeitliche Verlauf des Ansteuerstroms erfasst bzw. vorgegeben werden.

Der durch Druck und Strom bestimmte Kennwert des jeweiligen Magnetventils kann verschieden bestimmt werden. Nach einer Ausführung der Erfindung wird als Kennwert des jeweiligen Magnetventils das Produkt aus der auftretenden Bandbreite der Druckwerte und der auftretenden Bandbreite der Stromwerte gebildet. Insbesondere wird die Differenz des maximal und des minimal auftretenden Druckwertes mit der Differenz aus dem maximal auftretenden und dem minimal auftretenden Stromwert multipliziert.

Eine genauere Bestimmung des Magnetventilkennwerts kann durch Integration erreicht werden. Hierbei wird insbesondere das Integral des Druckverlaufs über dem Strom des jeweiligen Magnetventils gebildet, also $Q = \int p\,(I)\,dp/dI$.

Vorzugsweise wird der Alterungszustand der Magnetventile bestimmt und eine Vorhersage getroffen, ob die Funktionalität des jeweiligen Magnetventiles in der Zeit bis zur nächsten Bremsenrevision erhalten bleibt. Die Kennwerte des jeweiligen Magnetventils, die bei jeweils nach bestimmten Prüfungsintervallen durchgeführten Prüfungen gebildet werden, werden gespeichert, wobei aus den gespeicherten Kennwerten aus vorhergehenden Prüfungen und der aktuellen Prüfung anhand eines statistischen Diagnosemodells wie z. B.

durch eine Regressionsanalyse ein sich zukünftig einstellender Kennwert abgeleitet wird. Liegt der abgeleitete Kennwert jenseits eines vorgegebenen Grenzwerts, wird eine Funktionsstörung angenommen und das Ventil ausgetauscht, auch wenn der aktuelle Kennwert noch diesseits des vorgegebenen Grenzwerts liegt. Es wird also anhand der Änderungen des Kennwerts eines Magnetventils vorhergesagt, ob dessen Funktionalität den Zeitraum bis zur nächsten Bremsrevision in ausreichendem Maße übersteht. Wird z. B. von einem idealen Kennwert 100 ausgehend eine Alterung herab bis zu einem Kennwert von 80 zugelassen, so wird das Ventil, dessen aktueller Kennwert z. B. bei 85 liegt und insofern die Prüfung bestanden hätte, ausgetauscht, wenn der vorhergesagte Kennwert für die nächste Bremsrevision bei 75 liegt.

Bei der Prüfung von Doppelrückschlagventilen kann in Weiterbildung der Erfindung aus den stromauf und stromab des Ventils erfassten Druckwerten eine Druckdifferenz gebildet und die jeweilige Druckdifferenz mit einem vorgegebenen Druckdifferenzgrenzwert verglichen werden. Auch für das Doppelrückschlagventil kann eine Verschleiß- bzw. Alterungsprüfung durchgeführt werden. Hierbei kann darauf zurückgegriffen werden, daß sich der Umschaltpunkt des Doppelrückschlagventils im Laufe der Zeit durch Undichtigkeiten oder Klemmen des Kolbens verschieben wird. Bei definierten Ansteuerbedingungen kann jede Veränderung des Umschaltpunktes über Fensterbedingungen festgestellt werden. Liegt der Umschaltpunkt nicht mehr in einem vorgegebenen Sollfeld, kann das Doppelrückschlagventil ausgetauscht werden. Insbesondere können die Veränderungen des Umschaltpunktes zeitabhängig mit einer statistischen Prognosemethode der vorgenannten Art ausgewertet werden, um den Alterungszustand des Doppelrückschlagventils zu bestimmen.

Eine Verschleißzustands- bzw. Alterungsprüfung kann auch für im Druckkreis vorgesehene Druckminderventile durchgeführt werden. Hierzu kann ebenfalls ein für das Ventil charakteristischer Kennwert bestimmt werden, dessen Veränderung über der Zeit ein Maß für die Alterung bildet. Insbesondere kann bei definierten Ein- und Ausgangsbedingungen hinsichtlich Drücken und Volumina, die durch das Rohrsystem festgelegt sind, eine dynamische Kennlinie gebildet werden, und zwar durch den stromauf des Druckminderventils herrschenden Eingangsdruck und durch den stromab des Druckminderventils herrschenden Ausgangsdruck. Aus der Veränderung des Kennwerts über der Zeit kann auch hier in der zuvor genannten Art eine Prognose über den zukünftigen Verschleißzustand, insbesondere bis zur nächsten Revision getroffen werden.

In Weiterbildung der Erfindung wird des weiteren eine Leckageprüfung durchgeführt, wobei das Druckleitungsnetz insbesondere durch entsprechende Schaltung im Druckleitungsnetz angeordneter aktiver Bauteile in einzelne Leckagekreise unterteilt wird und die Leckageprüfung für jeden der Leckagekreise gesondert durchgeführt wird. Die Aufteilung des Druckleitungsnetzes in Unterkreise und deren separate Leckageprüfung gestattet eine einfache Ortung der Undichtigkeiten im Bremssystem. Mit Hilfe der Leckageprüfung können Undichtigkeiten an Ventilen oder Rohrverschraubungen, die mit konventionellen Methoden schwierig zu orten sind, sozusagen eingekreist werden.

Die Leckageprüfung kann auf verschiedene Art und Weise durchgeführt werden, nach einer bevorzugten Ausführung der Erfindung wird in den im übrigen abgesperrten Leckagekreis Druckfluid nachgespeist. Vorzugsweise wird zur Nachspeisung nicht ein eingebauter Kompressor des Systems benutzt, sondern eine Leckagemesseinrichtung mit einer Einspeisung aus dem Werkstatt-Druckluftnetz verwendet. Insbesondere kann als Leckagemesseinrichtung ein Venturirohr mit Differenzdrucktransmitter und Temperatursensor vorgesehen sein, womit ein in den Leckagekreis gegebenenfalls nachströmender Druckfluidmassenstrom bestimmbar ist. Die erfasste Nachspeisung wird sodann mit einem vorgegebenen Grenzwert verglichen. Anhand des Vergleichs wird entschieden, ob eine unzulässige Leckage vorliegt.

Alternativ oder zusätzlich zu der zuvor erwähnten Nachspeisung kann bei der Leckageprüfung der jeweilige Leckagekreis gänzlich abgesperrt werden, der Druck in dem Leckagekreis über einen bzw. vor und nach einem längeren Zeitraum erfasst und anhand des erfassten Druckverlaufs bzw. anhand der erfassten Druckanfangsund -endwerte eine Leckage bestimmt werden.

Die pneumatische Druckluftleistung des eingebauten Kompressors kann ebenfalls mit dem Venturirohr gemessen werden.

Zur Prüfung der Funktion eines Rückschlagventils und/oder eines Doppelrückschlagventiles, das zwei Eingangsdruckkreise voneinander trennt, kann eine separate, in das Druckleitungsnetz geschaltete, vorzugsweise jedoch nicht fest eingebaute, Druckabsenkungsvorrichtung verwendet werden. Als Druckabsenkungsvorrichtung kann z. B. ein zusätzliches Magnetventil, das separat von dem Bremsdiagnoserechner ansteuerbar ist, vorgesehen sein. Hierdurch wird das Druckniveau auf der jeweiligen Seite des Doppelrückschlagventiles abgesenkt, um die Umschaltung des Doppelrückschlagventiles zu überprüfen. Insbesondere kann aus den erfassten Druckwerten vor und nach dem Ventil eine Druckdifferenz und/oder ein zeitlicher Verlauf der Druckdifferenz bestimmt werden und mit einem vorgegebenen Grenzwert verglichen werden. Der Grenzwert kann in Abhängigkeit der vorgenommenen Druckabsenkung vorgegeben werden. Anhand des zeitlichen Verlaufs der Druckdifferenz kann entschieden werden, ob das Ventil richtig umschaltet.

Nachfolgend wird die vorliegende Erfindung anhand eines bevorzugten Ausführungsbeispiels und zugehöriger Zeichnungen näher erläutert. In den Zeichnungen zeigen:

Fig. 1    ein schematisches Schaltbild der Bremsanlage eines Regionaltriebwagens mit der daran angeschlossenen Bremsdiagnosevorrichtung nach einer bevorzugten Ausführung der Erfindung,

Fig. 2    eine Leckagemesseinrichtung zur Nachspeisung von Druckfluid in den Druckleitungskreis der Bremsanlage und zur Erfassung des nachgespeisten Druckfluidmassestroms bei einer Leckageprüfung,

Fig. 3    eine ausschnittsweise Darstellung des Druckleitungsnetzes aus Figur 1 mit einer damit verbundenen Druckabsenkungsvorrichtung zur Untersuchung eines Doppelrückschlagventiles,

Fig. 4    zwei Druck-Strom-Diagramme, die die dynamische Charakteristik eines Magnetventils wiedergeben und die Gewinnung eines entsprechenden Magnetventilkennwerts verdeutlichen,

Fig. 5    eine Tabelle in Matrixform, die die an einem Magnetventil und einem Doppelrückschlagventil auftretenden Systemzustände verdeutlicht,

Fig. 6    ein Flussdiagramm, das den Ablauf der Diagnoseschritte und die hier erfolgenden, unterschiedlichen Ansteuerungen der Bremsanlage verdeutlicht,

Fig. 7    eine Schnittdarstellung eines in der Bremsanlage verwendeten Magnetventils,

Fig. 8    eine Schnittdarstellung eines in der Bremsanlage verwendeten Doppelrückschlagventils,

Fig. 9    eine Schnittdarstellung eines in der Bremsanlage verwendeten Druckminderventils,

Fig. 10    zwei Druckdiagramme, die die dynamische Charakteristik eines Druckminderventils wiedergeben und die Gewinnung eines entsprechenden Druckminderventil-Kennwerts verdeutlichen,

Fig. 11    zwei Druckdiagramme, die die dynamische Charakteristik eines Doppelrückschlagventils wiedergeben und die Gewinnung eines entsprechenden Doppelrückschlagventil-Kennwerts verdeutlichen, und

Fig. 12    ein Strukturdiagramm zur Verdeutlichung der Fehlererkennungslogik zur Diagnose von Symptomen der Bauteile.

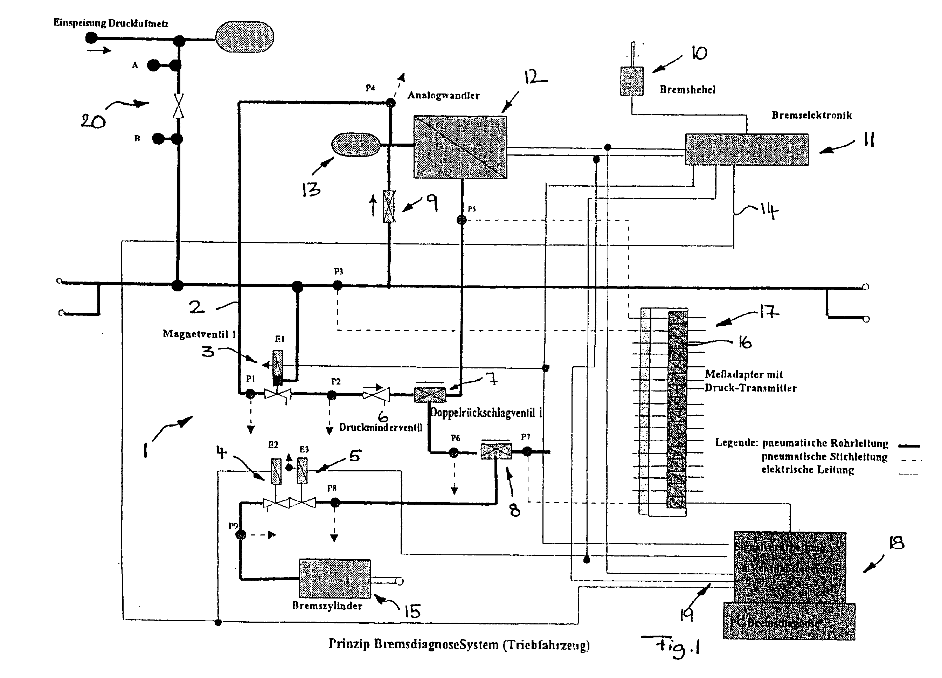

Figur 1 zeigt ein an sich bekanntes Druckleitungsnetz 1 eines Regionaltriebfahrzeugs mit einer Vielzahl von miteinander verbundenen Druckleitungen 2 und darin angeordneten aktiven Bauteilen umfassend Magnetventile, Doppelrückschlagventile, Hähne etc. Wie Figur 1 zeigt, sind insbesondere mehrere Magnetventile 3, 4 und 5, ein Druckminderventil 6, mehrere Doppelrückschlagventile 7, 8 und 9 in die Druckleitungen 2 geschaltet. Die Ansteuerung der Bremse kann über einen im Führerhaus des Fahrzeugs angeordneten Bremshebel 10 und eine damit verbundene Bremselektronik 11 erfolgen. Die Bremselektronik 11 steuert über einen Analogwandler 12 eine Druckquelle 13 sowie über separate elektrische Leitungen 14 die Magnetventile 3, 4 und 5 der Bremsanlage an, um in einem Bremszylinder 15 der Bremsanlage einen dem vom Bremshebel 10 jeweils gewählten Bremsprogramm entsprechenden Bremsdruck zu erzeugen.

Die Bremsdiagnosevorrichtung umfasst zunächst eine Vielzahl von Drucktransmittern bzw. Drucksensoren 16 zur Erfassung des in den Druckleitungen 2 herrschenden Fluiddrucks, und zwar an einer Vielzahl von Knotenpunkten P1, P2, P3, ... Pn. Dabei ist jeweils vor und nach jedem aktiven Bauteil ein Knotenpunkt vorgesehen bzw. ein Drucksensor 16 angeordnet, um jeweils stromauf und stromab eines jeden aktiven Bauteils den in der entsprechenden Druckleitung 2 herrschenden Druck zu erfassen.

Die Drucksensoren 16 können in unterschiedlicher Weise an das Druckleitungsnetz 1 angeschlossen sein. Gemäß einer bevorzugten Ausführung der Erfindung ist ein mobiler Einbau der Drucksensoren über Schnellkupplungen oder Rohrverschraubungen in den jeweiligen Knotenpunkten P1 bis Pn vorgesehen, d. h. die Drucksensoren 16 werden nur für die Durchführung der Diagnose eingebaut. Nach einer alternativen Ausführung der Erfindung, die in Figur 1 dargestellt ist, sind die Drucksensoren 16 in einem zentralen Prüf- bzw. Messadapter 17 zusammengefasst, wobei Stichleitungen mit kleinem Durchmesser zum jeweiligen Knotenpunkt P1 bis Pn führen. Gegebenenfalls können die Drucksensoren 16 auch in mehreren zentralen Messadaptern zusammengefasst sein. Der zentrale Messadapter 17 gemäß Figur 1 wird an der Anschlussstelle zur Diagnose eingebaut. Hierbei können die Stichleitungen zwischen den Knotenpunkten und dem Messadapter im Fahrzeug fest verlegt zu einer oder mehrerer Anschlussstellen des bzw. der Prüfadapter sein. Alternativ können die Stichleitungen in Form von Schläuchen vom Messadapter 17 zum jeweiligen Knotenpunkt P1 bis Pn zur Diagnose angeschlossen werden. Eine weitere alternative Ausführung der Diagnosevorrichtung kann darin bestehen, dass unmittelbar die Drucksensoren 16 am jeweiligen Knotenpunkt P1 bis Pn zur Diagnose angeschlossen werden.

In alternativer Weiterbildung der Erfindung können die Drucksensoren 16 auch am jeweiligen Knotenpunkt P1 bis Pn fest eingebaut sein.

Die Drucksensoren 16 bzw. der zentrale Messadapter 17 sind über geeignete Stecker elektrisch mit einem Bremsdiagnoserechner 18 verbunden. Der Bremsdiagnoserechner 18 ist darüber hinaus ebenfalls elektrisch mit den Magnetventilen 3, 4 und 5 verbunden. Zum einen können hierdurch die von der Bremselektronik 11 vorgegebenen Ansteuerströme erfasst werden. Zum anderen kann durch den elektrischen Anschluss der Magnetventile 3, 4 und 5 an den Bremsdiagnoserechner 18 auch eine rückwirkungsfreie, direkte Ansteuerung der einzelnen Magnetventile 3, 4 und 5 durch den Bremsdiagnoserechner 18 vorgesehen sein. Die elektrischen Verbindungen zwischen dem Bremsdiagnoserechner 18 und den Magnetventilen ist durch 19 gekennzeichnet. Ebenso ist der Bremsdiagnoserechner 18 mit den Ausgängen der Bremselektronik 11 zum Analogwandler 12 hin elektrisch verbunden.

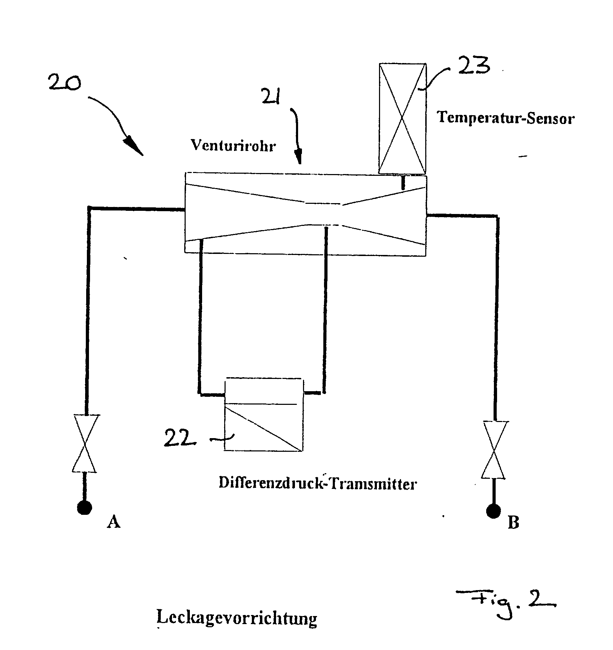

Des weiteren umfasst die Bremsdiagnosevorrichtung eine Leckagenachspeise- und Messeinrichtung 20, die mit dem Druckleitungsnetz 1 in Strömungsverbindung bringbar ist und in Figur 2 näher dargestellt ist. Die Leckagenachspeise- und Messeinrichtung 20 ist ebenfalls von dem Bremsdiagnoserechner 18 her ansteuerbar. Zum anderen werden die von der Leckagemesseinrichtung 20 erfassten Daten auf den Bremsdiagnoserechner 18 über nicht näher dargestellte Verbindungen übertragen. Die Leckagenachspeise- und Messeinrichtung 20 verwendet eine separate Druckfluidquelle, deren Druckfluideinspeisung in das Druckleitungsnetz 1 über ein Venturirohr 21 erfolgt, dem ein Differenzdrucksensor 22 sowie ein Temperatursensor 23 zugeordnet ist, um einen Differenzdruck des Druckfluids an den in Figur 2 gezeigten Stellen des Venturirohres 21 sowie an der ebenfalls in Figur 2 gezeigten Stelle des Venturirohres 21 die Temperatur des nachgespeisten Druckfluids zu erfassen. Das Venturirohr 21 liefert in Verbindung mit dem hochempfindlichen Differenzdrucksensor- bzw. Transmitter 22 und dem Temperatursensor 23 ohne Zeitverzug nach an sich bekannter Berechnung einen Wert für den nachgespeisten Leckage-Massestrom bei der Leckageprüfung, wie noch erläutert werden wird. Alternativ kann zur Leckagemessung über einen längeren Zeitraum eine etwaige Druckabsenkung erfasst und daraus eine Leckage bestimmt werden. Ebenso kann die pneumatische Leistung des eingebauten Kompressors mit der Leckagemeßeinrichtung bestimmt werden.

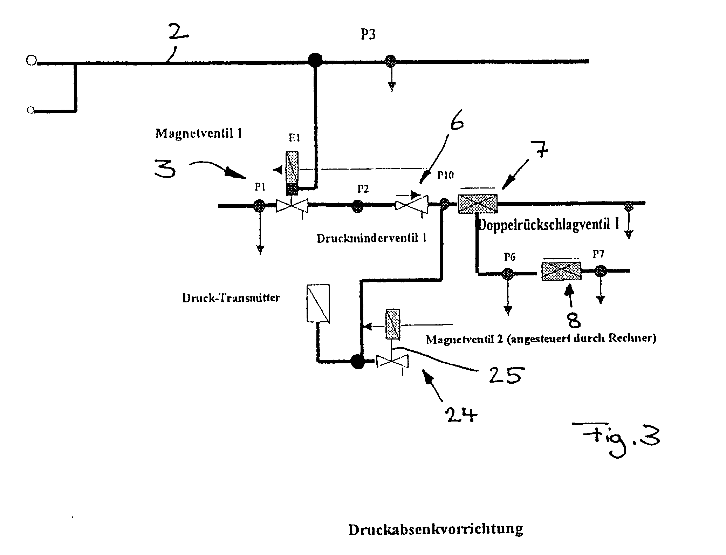

Ferner umfasst die Bremsdiagnosevorrichtung eine separate Druckabsenkungsvorrichtung 24, die in Figur 3 gezeigt ist. Ein von dem Bremsdiagnoserechner 18 separat ansteuerbares Magnetventil ist an dem Knotenpunkt P10 angeschlossen, der zwischen dem Druckminderventil 6 und dem ersten Doppelrückschlagventil 7 liegt. Mit Hilfe des separaten Magnetventils 25 kann die Funktion des Doppelrückschlagventils 7 geprüft werden, wie noch erläutert wird.

Nachfolgend wird die Funktion und Wirkungsweise der Bremsdiagnosevorrichtung näher erläutert:

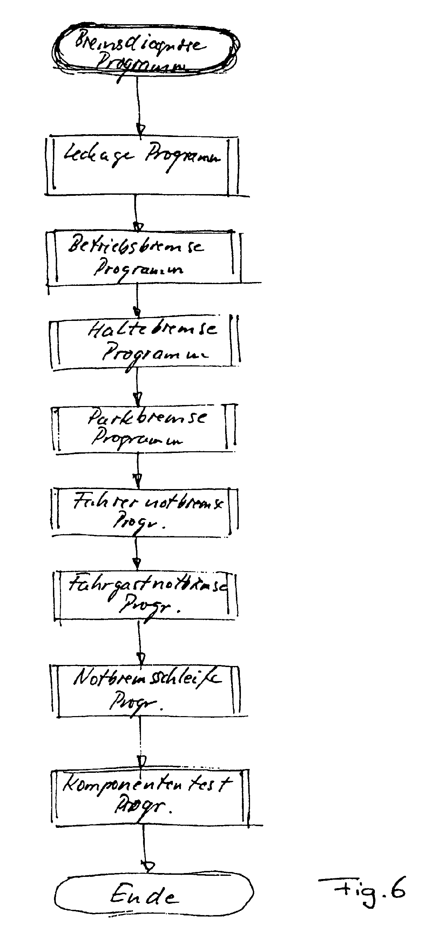

Wie Figur 6 zeigt, arbeitet die Bremsdiagnosevorrichtung mehrere Diagnoseprogramme ab. Zunächst wird ein Leckageprogramm abgearbeitet, mit dem das Druckleitungsnetz 1 und die darin angeordneten aktiven Bauteile auf Leckagen geprüft werden.

Zur einfacheren Ortung der Undichtigkeiten in der Bremsanlage wird zunächst eine logische Aufteilung des Druckleitungsnetzes 1 in Leckagekreise, d. h. mehrere Unterkreise durchgeführt, und zwar vorzugsweise unter Verwendung der in der Bremsanlage eingebauten Durchflusshähne, Rückschlagventile, die eine Rückströmung in den speisenden Druckkreis verhindern und der Doppelrückschlagventile. Vorzugsweise wird zunächst mit dem unmittelbar mit der Leckagemesseinrichtung 20 verbundenen Leckagekreis begonnen. Über die Leckagemesseinrichtung 20 wird versucht, in den ansonsten abgesperrten Leckagekreis Druckfluid nachzuspeisen. Mittels des Venturirohres 21 und der damit verbundenen Differenzdruck- und Temperatursensoren 22 und 23 werden äußerst präzise auch sehr geringe Leckagemasseströme erfasst bzw. können berechnet werden. Der ermittelte Wert wird sodann in dem Bremsdiagnoserechner 18, der eine entsprechende Vergleichseinrichtung aufweist, mit einem vorgegebenen Grenzwert verglichen. In Abhängigkeit dieses Grenzwertvergleiches wird bestimmt, ob eine zu reparierende Leckage vorliegt oder nicht.

Sodann wird der nächste, anschließende Leckage-Unterkreis mit der Leckagemesseinrichtung 20 in Strömungsverbindung gebracht und die entsprechende Prüfung für diesen zweiten Leckagekreis wiederholt. Der zweite Leckagekreis kann unmittelbar mit der Leckagemesseinrichtung 20 in Strömungsverbindung gebracht werden, z. B. über einen entsprechenden Anschluss. Es kann auch vorgesehen sein, den zweiten Leckagekreis über den ersten Leckagekreis mit der Leckagemesseinrichtung 20 in Strömungsverbindung zu bringen. In diesem Fall wird der Grenzwert des zulässigen Nachspeise-Massestroms um den Leckage-Massestrom des ersten Leckagekreises erhöht. Hierdurch kann auch dann, wenn der erste Leckagekreis eine Undichtigkeit aufweist, dennoch mit der Leckageprüfung der weiteren, anschließenden Leckagekreise weitergemacht werden. Die kettenartige Prüfung der Leckagekreise besitzt den Vorteil, dass nur ein Anschluss für die Leckagenachspeise- bzw. Messeinrichtung 20 vorgesehen zu werden braucht. Ein unmittelbarer, individueller Anschluss eines jeden Leckagekreises an die Leckagemesseinrichtung 20 besitzt hingegen den Vorteil einer noch höheren Genauigkeit, da ein kettenartiges Aufaddieren der Leckagen vorhergehender Leckagekreise nicht nötig ist.

Nach Durchführung der Leckageprüfung schreitet der Bremsdiagnoserechner 18 zur Prüfung der aktiven Bauteile fort. Wie Figur 6 zeigt, werden hierzu verschiedene Bremsprogramme gefahren. Insbesondere werden für die Bremsanlage verschiedene Ansteuergrößen vorgegeben, was in besonderes einfacher Weise durch entsprechende Einstellung des Bremshebels 10 erfolgen kann. Gemäß Figur 6 werden die Funktionen Betriebsbremse, Haltebremse, Parkbremse, Fahrernotbremse, Fahrgastnotbremse und Notbremsschleife eingestellt. Bei vollständig funktionierenden aktiven Bauteilen, insbesondere der Ventile, stellt sich an den Knotenpunkten P1 bis Pn für jede der Bremsfunktionen ein vorbestimmtes Druck- bzw. Signalmuster ein. In Abhängigkeit dieses für eine funktionierende Bremsanlage bekannten Referenzsignalmusters können sodann Grenzwerte vorgegeben werden, mit denen dann die erfassten Signalwerte bzw. daraus abgeleitete Signalwerte verglichen werden. Treten an den aktiven Bauteilen Funktionsstörungen auf, liegen die erfassten Signalwerte bzw. die daraus abgeleiteten Größen jenseits der vorgegebenen Grenzwerte, so dass dann eine entsprechende Fehlerdiagnose ausgegeben werden kann.

Zusätzlich zu der Abarbeitung der dem Bremsbetrieb entsprechenden Bremsfunktionen kann eine Bauteileinzelprüfung abgearbeitet werden, bei der insbesondere die Magnetventile individuell von dem Bremsdiagnoserechner 18 angesteuert werden. Zur Prüfung der Doppelrückschlagventile wird auf die Druckabsenkvorrichtung 24 aus Figur 3 zurückgegriffen, die ebenfalls vom Bremsdiagnoserechner 18 angesteuert wird.

Insbesondere wird bei der Prüfung der aktiven Bauteile folgendermaßen vorgegangen:

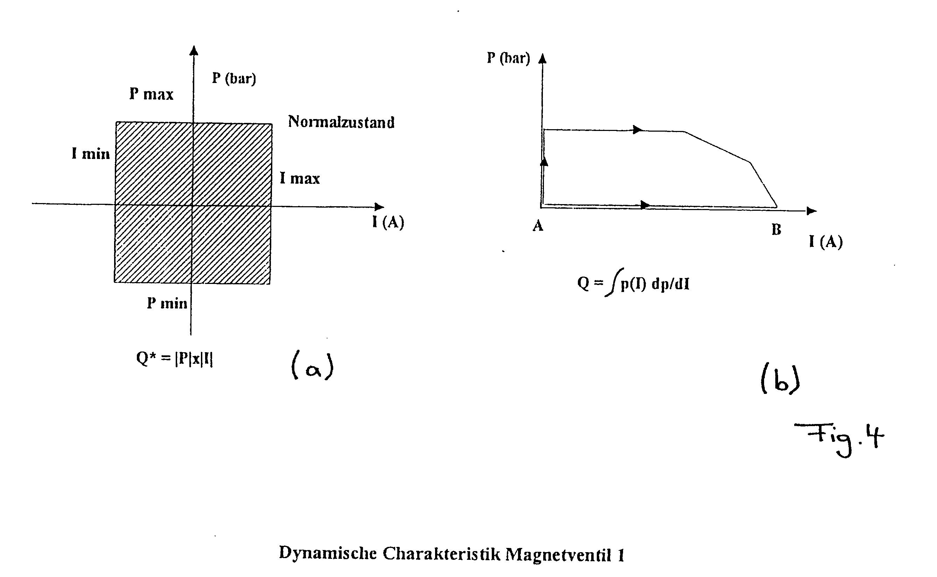

Die Prüfung der Magnetventile 3, 4 und 5 sei anhand der Überprüfung des ersten Magnetventils 3 erläutert. Gemäß Figur 1 ist dem Magnetventil 3 der pneumatische Knoten P1 und der pneumatische Knoten P2 sowie die elektrische Ansteuergröße E1, d. h. der Erregerstrom des Magnetventils zugeordnet. Bei der Erregung des Magnetventils im Rahmen von Bremsprofilen oder durch Einzelansteuerung werden in den beiden Knotenpunkten P1 und P2 die Drücke p1 und p2 sowie der Strom I1 über der Zeit gemessen. Aus diesen Signalen werden die einzelnen Symptome gewonnen. Unter anderem kann zur Charakterisierung der einwandfreien Funktion des Magnetventils die Zuordnung von Strom- und Druckwerten herangezogen werden. Es kann ein einfacher Kennwert $Q = |p| \times |i|$ gebildet und mit einem Soll- bzw. Grenzwert verglichen werden. Figur 4 a zeigt diesen Kennwert. Es wird der minimal auftretende Druck p min und der maximal auftretende Druck p max erfasst bzw. bestimmt. Ebenso wird der minimal auftretende Strom i min und der maximal auftretende Strom i max erfasst. Aus den jeweiligen Maximal- und Minimalwerten wird die Differenz gebildet. Sodann wird der jeweils entstehende Betrag von Strom und Druck multipliziert, um den Kennwert $Q = |p| \times |i|$ zu erhalten.

Um den Kennwert Q genauer zu ermitteln, kann auch das Integral des Druckverlaufs über den Stromverlauf gebildet werden, nämlich $Q = \int p(i)\, dp/di$. Dies ist in Figur 4 b gezeigt.

Mit dem Kennwert Q können Zustandsänderungen des Ventils frühzeitig erkannt werden, noch ehe zulässige Grenzwerte vom Strom oder Druckwerte überschritten werden. So wird z. B. ein Klemmen eines Magnetankers oder ein Teilkurzschluss der Magnetspule in Folge einer Änderung der Induktivität zu einem anderen Kennwert führen. Weiterhin kann mit einem Signalmodell eine näherungsweise Vorausbestimmung von zukünftigen Kennwertveränderungen mit Hilfe einer Regressionsanalyse erfolgen. Hierbei gilt:

$$y(k) = a + ak + ak^2 + ...$$

$k = t/T = 0,1,2,....$ mit T = Gesamtbetriebszeit

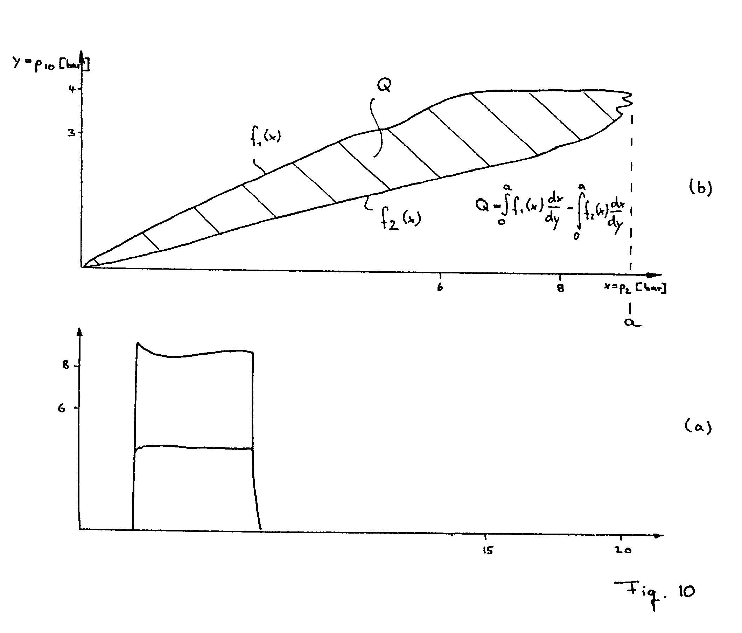

Auch für die weiteren Ventile können entsprechende Kennwerte bestimmt werden, die den Verschleißzustand bzw. die erreichte Alterung des jeweiligen Ventils charakterisieren. Fig. 10 verdeutlicht dies für das Druckminderventil 6. Bei definierten Ein- und Ausgangsbedingungen für die Drücke und die Volumina, die durch das Rohrsystem festgelegt sind, wird die dynamische Kennlinie des Druckminderventils gebildet, und zwar durch den Eingangsdruck p2 und den Ausgangsdruck p10 (vgl. Fig. 3). Wie Fig. 10 bezeigt, ergeben sich zwei charakteristische Kurven $f_1(x)$ und $f_2(x)$. Die hiervon begrenzte Fläche wird als Kennwert Q definiert und bildet einen charakteristischen Kennwert für den Verschleißzustand bzw. die Alterung des Ventils. Insbesondere kann durch Integration der Kennwert Q bestimmt werden, nämlich mittels der Beziehung

$$Q = \int_0^a f_1(x)\, \frac{dx}{dy} - \int_0^a f_2(x)\, \frac{dx}{dy}.$$

Insbesondere kann als ein Maß für die Alterung die Veränderung von Q über der Zeit mit einer statistischen Prognosemethode, z. B. der Regressionsanalyse, herangezogen werden.

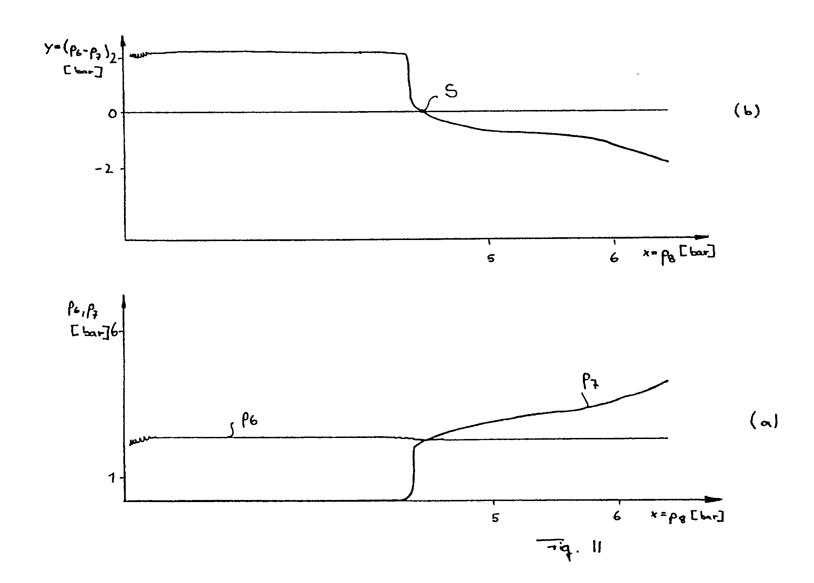

Die Gewinnung eines charakteristischen Kennwerts für das Doppelrückschlagventil 8 ist in Fig. 11 verdeutlicht. Hierbei wird von der Erkenntnis ausgegangen, daß der Umschaltpunkt S (vgl. Fig. 11 b) des Doppelrückschlagventils sich im Laufe der Zeit durch Undichtigkeiten oder Klemmen des Kolbens verschieben wird. Fig. 11 a zeigt dabei das Verhalten der am Doppelrückschlagventil 8 anliegenden Drücke p6 und p7 über dem Druck p8, wobei die Drücke p6, p7 und p8 aus Fig. 1 ersichtlich sind. Hieraus läßt sich die Druckdifferenz p6 —— p7 über dem Druck p8 gewinnen, wie dies in Fig. 11 b dargestellt ist. Der Nulldurchgang definiert den Umschaltpunkt S. Bei definierten Ansteuerbedingungen kann jede Veränderung des Umschaltpunktes S im Koordinatensystem in x oder y-Richtung über Fensterbedingungen festgestellt werden. Diese Veränderungen über die Zeit können mit einer statistischen Prognosemethode der vorgenannten Art analog der Kennwertauswertung beim Magnetventil bzw. beim Druckminderventil ausgewertet werden.

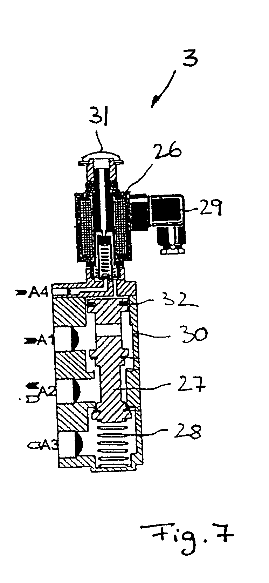

Um die verschiedenen Fehlersymptome erkennen zu können, können verschiedene logische Bedingungen für die gemessenen Werte vorgegeben werden. Ein typisches Magnetventil ist in Figur 7 gezeigt, wobei typische Fehler folgendermaßen bestimmt werden können:

Liegt an dem Verbraucheranschluss A2 bei nicht-erregtem Ventilmagnet kein Versorgungsdruck an, was daran liegen kann, dass kein Versorgungsdruck am Anschluss A1 vorliegt, dass der Ventilmagnet 26 defekt ist oder dass der Kolben 27 klemmt bzw. die Druckfeder 28 defekt ist, wird eine Fensterbedingung p1(t) für den zeitlichen Verlauf des am Knoten P1 auftretenden Drucks vorgegeben.

Um zu erkennen, dass keine Entlüftung des Verbraucheranschlusses A2 über den Anschluss A3 erfolgt, was daran liegen kann, dass keine Spannung vorhanden ist und dadurch der Ventilmagnet 26 nicht erregt wird, dass die Kabeladern im Stecker 29 lose sind, dass der Stecker 29 mit der Beschaltung defekt ist, dass der Ventilmagnet 26 defekt ist, dass kein oder nur ein zu geringer Steuerdruck am Anschluss A4 vorliegt oder auch dass der Kolben 27 klemmt, wird eine Bool'sche Abfrage durchgeführt, ob der am Knoten P1 anliegende Druck p1(t) mit dem am Knotenpunkt P2 anliegenden Druck p2(t) im zeitlichen Verlauf übereinstimmt.

Ein weiterer Fehler kann sein, dass am Entlüftungsanschluss A3 ständig Luft abbläst. Hierbei kann der Kolben klemmen oder die Druckfeder defekt sein bzw. die Ventilsitze im Magnetgrundventil 30 undicht sein. Um dies zu erkennen, kann eine Leckageprüfung der zuvor beschriebenen Art durchgeführt werden.

Um festzustellen, ob am Entlüftungsfilter 31 des Magnetventils 3 bei nicht-erregtem Ventilmagneten 26 ständig Luft abbläst, was an defekten Ventilsitzen oder einem defekten Dichtring 32 liegen kann, kann ebenfalls eine Leckageprüfung der vorgenannten Art durchgeführt werden.

Ein weiterer Fehler kann sein, dass am Entlüftungsfilter 31 bei erregtem Ventilmagneten 26 ständig Luft abbläst, z. B. in Folge eines defekten Ventilsitzes. Dies kann dadurch erkannt werden, dass das Magnetventil 3 separat von dem Bremsdiagnoserechner 18 angesteuert wird und hierbei eine Leckageprüfung der vorgenannten Art durchgeführt wird.

Des weiteren können die erfassten Stromwerte i(t) einer Fensterbedingung unterworfen, d. h. mit Grenzwerten verglichen werden, um z. B. zu erfassen, ob Stromgrenzwerte überschritten werden.

Um die Doppelrückschlagventile 7 und 8 (vgl.

Figur 1) zu überprüfen, kann folgendermaßen vorgegangen werden:

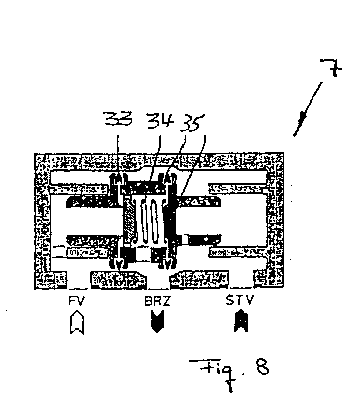

Ein typisches Symptom bei einem Doppelrückschlagventil, wie es in Figur 8 gezeigt ist, ist, dass das Ventil bei einer Druckdifferenz vorgegebener Größe, z. B. von mindestens 0,15 bar zwischen den Anschlüssen FV und STV nicht umschaltet, was an einem klemmenden Kolben liegen kann. Um dies zu erkennen, werden bei entsprechender Ansteuerung der Bremsanlage die Drücke in den Knotenpunkten P6, P7 und P8 erfasst und folgende Abfragebedingungen vorgegeben:

Wenn (p6-p7)>p, Dann p8=p6 und
Wenn (p7-p6)>p, Dann p8=p7.

Ein weiteres typisches Fehlersymptom kann sein, dass Luft von dem Anschluss STV zu dem Anschluss FV strömt, z. B. in Folge eines defekten Dichtrings 33, eines defekten Ventilsitzes oder einer defekten Druckfeder 34. Dieses Fehlersymptom kann durch einen Leckageprüfung erkannt werden. Durch den im Druckkreis liegenden elektrischen/pneumatischen Wandler wird der Druck auf konstantes Niveau geregelt. Ein Überströmen im Doppelrückschlagventil hat eine Nachspeisung zur Folge.

Ein weiteres typisches Fehlersymptom des in Figur 8 gezeigten Doppelrückschlagventiles ist überströmende Luft vom Anschluss FV zum Anschluss STV, was an einem defekten Dichtungsring 35 liegen kann. Um dies zu erkennen, wird ebenfalls eine Leckageprüfung durchgeführt. Durch das im Druckkreis liegende Druckminderventil 6 wird der Druck auf konstantes Niveau geregelt. Überströmen im Doppelrückschlagventil führt zu einer erfassbaren Nachspeisung.

Für die Prüfung der Doppelrückschlagventile wird auf die Druckabsenkvorrichtung 24 zurückgegriffen, die ebenfalls von dem Bremsdiagnoserechner 18 ansteuerbar ist. Wie Figur 3 zeigt, wird an dem Knoten P10 ein Zweiwegemagnetventil 25 angeschlossen, das zur Prüfung geöffnet wird, um in dem entsprechenden Abschnitt des Druckleitungsnetzes gegenüber der bezüglich des Ventils anderen Seite des Druckleitungsnetzes den Druck abzusenken. Durch die Absenkung öffnet das Doppelrückschlagventil. Hierdurch kann das Umschalten des Ventils geprüft, ebenso eine Leckageprüfung durchgeführt werden.

Auch hier kann anhand der Änderungen des Kennwertes des Doppelrückschlagventils vorhergesagt werden, ob dessen Funktionalität den Zeitraum bis zur nächsten Bremsrevision in ausreichendem Maße übersteht.

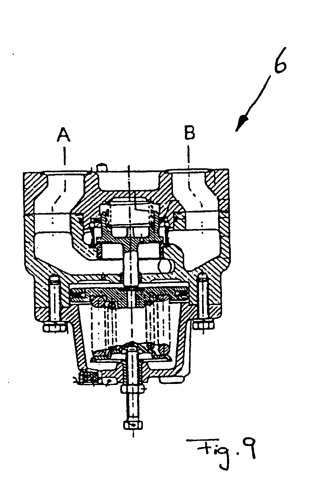

Auch das Druckminderventil 6 (Figur 1) hat typische Fehler bzw. Fehlersymptome, die mit dem vorliegenden Verfahren erkannt werden können. Am in Figur 9 gezeigten Druckminderventil kann typischerweise das Symptom auftreten, dass am Minderdruckanschluss A kein Ausgangsdruck vorhanden ist, z. B. in Folge fehlenden Drucks am Hochdruckanschluss B oder einer fehlenden Einspeisung wegen eines Blockierens des Ventilkolbens oder der Ventildruckfeder. Diese Fehler bzw. dieses Fehlersymptom kann durch eine Druckfensterbedingung erkannt werden.

Des weiteren kann vorkommen, dass der Minderdruck A niedriger ist als der Einstellwert des Druckminderventils. Dies kann an einem zu niedrigen Druck bei B oder einer veränderten Einstellung des Druckminderventils z. B. in Folge einer gelockerten Mutter liegen. Zur entsprechenden Erkennung kann eine Druckreferenz mit Fensterbedingung durchgeführt werden.

Schließlich ist ein typisches Fehlersymptom ein ständiges Luftabströmen an der Entlüftungsbohrung O (vgl. Figur 9). Zur Erkennung wird vorzugsweise eine Leckageprüfung der vorgenannten Art durchgeführt.

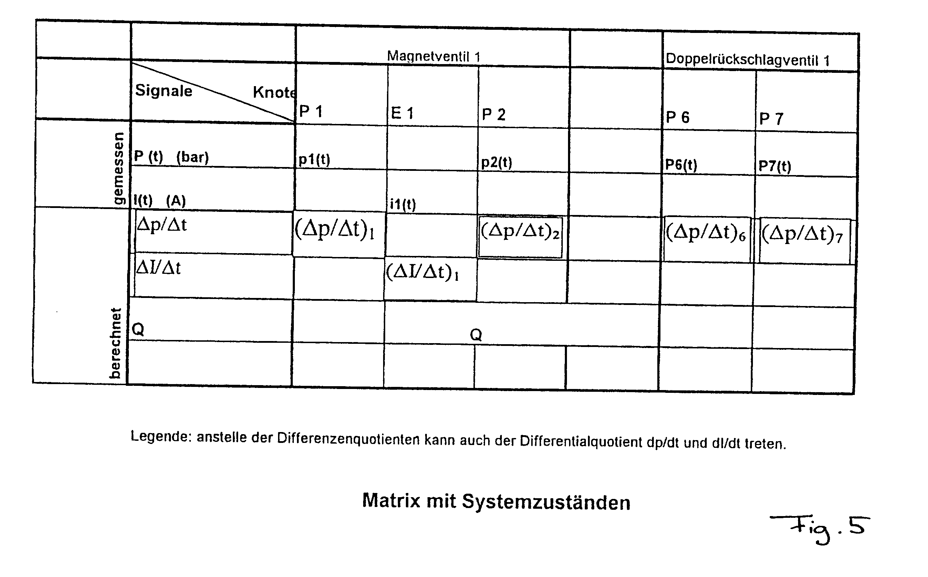

Bei der Abarbeitung des Diagnoseverfahrens wird also ein Signalmuster erhalten. In Abhängigkeit von jeweiligen Teilprozessen, d. h. Bremsprofilen oder Individualprüfungen ergeben sich an den jeweiligen Knoten P1 bis Pn typische Druck- und Strommesswerte, aus denen zusätzlich die entsprechenden Kennwerte errechnet werden. Diese für den jeweiligen Knoten P1 bis Pn und E1 bis En typischen Werte werden in einer Matrix Referenzwerten bzw. Grenzwerten gegenübergestellt. Ein Beispiel für die gemessene bzw. berechnete Zustandsmatrix ist in Figur 5 angegeben. Der jeweilige gemessene und berechnete Systemzustand eines bestimmten Bremsprofils wird durch die Matrix repräsentiert. Die gemessenen bzw. berechneten Signal- und Kennwerte werden entsprechenden Abfragebedingungen unterworfen, insbesondere Fensterbedingungen, Flankenbedingungen, um positive und negative Signalflanken zu erkennen, Signaländerungen und Bool'schen Abfragen. Für jeden Teilprozess werden die Abfragebedingungen neu gesetzt.

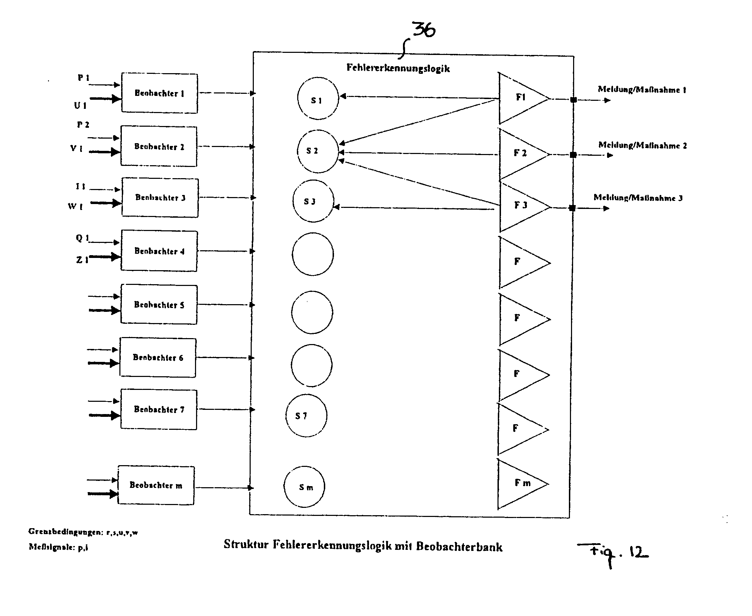

Neben einer Individualprüfung der einzelnen Bauteile durch spezielle Ansteuerung und Istwerte-Auswertung liegt ein besonders vorteilhafter Aspekt der Erfindung darin, daß eine insgesamte Erfassung des Systemzustands durchgeführt und daraus Funktionsstörungen bzw. der Verschleiß einzelner Bauteile bestimmt wird. An den Knotenpunkten erfaßte Istwerte von Druck und/oder Strom ergeben ein Signalmuster, das den Systemzustand der Bremsanlage beschreibt. Mittels einer gespeicherten Fehlererkennungslogik werden aus den erfaßten Istwerten bzw. aus daraus abgeleiteten Werten Funktionsstörungen und/oder Verschleißzustände der einzelnen aktiven Bauteile diagnostiziert. Dieser Ansatz geht von der Erkenntnis aus, daß individuelle Fehler bzw. Verschleißzustände einzelner Bauteile nicht nur die unmittelbar zugehörigen Druckwerte stromauf und stromab bzw. die entsprechenden Stromwerte des Bauteils verändern, sondern sich insgesamt auf die Druck- und Stromwerte an verschiedenen Knotenpunkten der Bremsanlage auswirken, sozusagen fortpflanzen. Werden nun an den Knotenpunkten die entsprechenden Istwerte von Druck und/oder Strom erfaßt, können mittels einer geeigneten Fehlererkennungslogik, wie in Fig. 12 dargestellt, Rückschlüsse auf Symptome einzelner Bauteile gezogen werden. Gemäß Fig. 12 werden an den Fehlererkennungslogikbaustein die erfaßten Istwerte der Beobachter 1 bis m gegeben. Die Fehlererkennungslogik verarbeitet die den Systemzustand wiedergebenden Werte bzw. Größen wie Drücke, Ströme und dergleichen weiter und gibt entsprechende Fehler bzw. Symptommeldungen aus. Gegebenenfalls kann die Meldung lauten, daß ein bestimmtes aktives Bauteil, z. B. ein bestimmtes Druckminderventil auszutauschen ist.

Wie Fig. 12 zeigt, sind die Fehler-Symptom-Zusammenhänge des Bremsprozesses maßgeblich durch kausale Wirkungsketten charakterisiert. In dem Fehlererkennungslogikbaustein 36 sind die Symptome und Fehler in einer strukturieren Hierarchie angeordnet, wobei die gerichteten Kanten im Netz die kausalen Wirkungsketten angeben. Ausgehend von den verfügbaren Informationen an den Systemknoten wird sukzessive auf die diesen Ausprägungen zugrundeliegenden Ursachen bzw. Fehler auf der Basis der Netzdarstellung zurückgeschlossen.

## Patentansprüche

1. Verfahren zur Diagnose von Funktionsstörungen und/oder des Verschleißzustands der aktiven Bauteile (3, 4, 5, 6, 7, 8) einer Bremsanlage eines Fahrzeugs, insbesondere Schienenfahrzeugs, das ein Druckleitungsnetz (1) mit mehreren darin angeordneten aktiven Bauteilen aufweist, wobei die aktiven Bauteile, insbesondere die Ventile (3, 4, 5, 6, 7, 8, 9) der Bremsanlage, im eingebauten Zustand geprüft werden, mit folgenden Schritten:

   Vorgabe einer Ansteuergröße für die Bremsanlage bzw. die aktiven Bauteile,

   Erfassung des sich einstellenden Drucks in den Druckleitungen (2) jeweils an Knotenpunkten (P1, P2, P3... Pn) des Druckleitungsnetzes (1) stromauf und stromab eines jeden aktiven Bauteils (3, 4, 5, 6, 7, 8, 9),

   Vergleich der erfassten Druckwerte (p1, p2... pn) und/oder daraus abgeleiteter Werte (Q) mit jeweiligen Grenzwerten und automatische Diagnose von Funktionsstörungen und/oder des Verschleißzustands eines jeden aktiven Bauteils anhand des Vergleichs, wobei die Grenzwerte in Abhängigkeit der Ansteuergröße vorgegeben werden.

2. Verfahren nach dem vorhergehenden Anspruch, wobei verschiedene Bremsprogramme gefahren werden, bei denen verschiedene Ansteuergrößen für die Bremsanlage bzw. die aktiven Bauteile vorgegeben werden, wobei in Abhängigkeit der verschiedenen Ansteuergrößen verschiedene Grenzwerte für den durchzuführenden Vergleich vorgegeben werden, wobei vorzugsweise die einzelnen aktiven Bauteile gesondert angesteuert und entsprechend der Einzelansteuerung gesonderte Grenzwerte vorgegeben werden, anhand denen die Vergleiche zwischen erfassten Druckwerten bzw. daraus abgeleiteten Werten und Grenzwerten durchgeführt werden und im Rahmen einer Systemprüfung mittels einer gespeicherten Fehlererkennungslogik aus an den Knotenpunkten erfaßten Istwerten von Druck und/oder Strom bzw. aus daraus abgeleiteten Werten Funktionsstörungen und/oder der Verschleißzustand einzelner aktiver Bauteile bestimmt werden.

3. Verfahren nach einem der vorhergehenden Ansprüche, wobei als Druckwerte (p1(t), p2(t), p3(t)... pn (t)) zeitliche Verläufe der Drücke an den Knotenpunkten (P1, P2, P3... Pn) erfasst werden und anhand des jeweiligen zeitlichen Verlaufs und/oder daraus abgeleiteter Werte ein Vergleich mit Grenzwerten durchgeführt wird, und wobei bei der Prüfung von Magnetventilen (3, 4, 5) zusätzlich zur Erfassung der Druckwerte stromauf und stromab des jeweiligen Magnetventils auch der Ansteuerstrom (i1, i2, i3), mit dem das Magnetventil angesteuert wird, erfasst und/oder vorgegeben wird, wobei aus den für ein jeweiliges Magnetventil erfassten Druckwerten und Ansteuerstromwerten ein Kennwert (Q) gebildet wird, und wobei der so gebildete Kennwert (Q) mit einem vorgegebenen Grenzwert verglichen wird, wobei ein absoluter Wert und/oder der zeitliche Verlauf des Ansteuerstroms (i1, i2, i3) erfasst und/oder vorgegeben wird, wobei insbesondere als Kennwert (Q) des jeweiligen Magnetventils (3, 4, 5) das Produkt $Q = |p| \times |i|$ aus der Differenz der maximal und minimal auftretenden Druckwerte (p max, p min) und der Differenz aus den maximal und minimal auftretenden Stromwerten (i max, i min) gebildet wird und/oder als Kennwert (Q) des jeweiligen Magnetventils (3, 4, 5) das Integral $Q = \int p(I)$ dp/dl des Druckverlaufs über dem Ansteuerstrom gebildet wird und die Kennwerte (Q) eines jeweiligen Magnetventils, die bei jeweils nach bestimmten Prüfungsintervallen durchgeführten Prüfungen gebildet werden, gespeichert werden, wobei aus den gespeicherten Kennwerten anhand eines Modells, insbesondere durch Regressionsanalyse, ein sich zukünftig einstellender Kennwert (Q) abgeleitet wird, und wobei eine Funktionsstörung angenommen wird, wenn der abgeleitete Kennwert jenseits eines vorgegebenen Grenzwerts liegt.

4. Verfahren nach einem der vorhergehenden Ansprüche, wobei bei der Prüfung von Doppelrückschlagventilen (7, 8) aus den erfassten Druckwerten (p6, p7, p8) stromauf und stromab des jeweiligen Doppelrückschlagventils eine Druckdifferenz gebildet und die jeweilige Druckdifferenz mit einem vorgegebenen Druckdifferenzgrenzwert verglichen wird, und wobei zur Bestimmung des Verschleißzustandes und/oder der Alterung von Doppelrückschlagventilen (7, 8) definierte Ansteuerbedingungen vorgegeben werden, eine Veränderung eines Umschaltpunktes festgestellt wird und aus den erfaßten Veränderungen des Umschaltpunktes über der Zeit anhand eines Modells, insbesondere durch Regressionsanalyse, das zukünftige Einhalten eines vorgegebenen Grenzwertes prognostiziert wird, und wobei zur Prüfung eines Rückschlagventils, eines Doppelrückschlagventils und/oder eines daran anschließenden Druckleitungsnetzabschnitts mittels einer separat ansteuerbaren Druckabsenkvorrichtung (24), vorzugsweise eines zusätzlichen Magnetventils (25), der Druck in einem an das Rückschlagventil bzw. Doppelrückschlagventil angrenzenden Druckleitungsabschnitt abgesenkt wird, wobei aus den erfassten Druckwerten vor und nach dem Rückschlag- bzw. Doppelrückschlagventil eine Druckdifferenz und/oder ein zeitlicher Verlauf der Druckdifferenz bestimmt wird und mit einem vorgegebenen Grenzwert verglichen wird, und wobei für ein Druckminderventil (6) ein Kennwert aus einer dynamischen Kennlinie, die durch einen am Druckminderventil anliegenden Eingangsdruck (p2) und Ausgangsdruck (p10) definiert wird, gewonnen wird, wobei vorzugsweise aus einer Veränderung dieses Kennwertes über der Zeit mittels einer statistischen Prognosemethode, insbesondere einer Regressionsanalyse, der Verschleißzustand und/oder die Alterung des Druckminderventils bestimmt wird.

5. Verfahren nach einem der vorhergehenden Ansprüche, wobei eine Leckageprüfung durchgeführt wird, wobei das Druckleitungsnetz, insbesondere durch entsprechende Schaltung der im Druckleitungsnetz (1) angeordneten aktiven Bauteile, in einzelne Leckagekreise unterteilt wird und die Leckageprüfung für jeden der Leckagekreise gesondert durchgeführt wird, wobei bei der Leckageprüfung aus einer Druckfluidquelle (20) Druckfluid in den jeweiligen, im übrigen abgesperrten Leckagekreis nachgespeist wird, die jeweils erfolgende Druckfluidnachspeisung erfasst und mit einem vorgegebenen Grenzwert verglichen wird, wobei insbesondere mittels eines Venturirohres (21) der Druckfluidmassenstrom der Nachspeisung bestimmt wird, und wobei vorzugsweise bei der Leckageprüfung der jeweilige Leckagekreis gänzlich abgesperrt wird, der Druck in dem Leckagekreis über einen bzw. nach einem längeren Zeitraum erfasst und anhand des erfassten Druckverlaufs und/oder anhand von erfassten Druckanfangs- und -endwerten eine etwaige Leckage bestimmt wird.

**6.** Vorrichtung zur Diagnose von Funktionsstörungen der aktiven Bauteile (3, 4, 5, 6, 7, 8, 9) einer Bremsanlage eines Fahrzeugs, insbesondere Schienenfahrzeugs, das ein Druckleitungsnetz mit mehreren darin angeordneten aktiven Bauteilen aufweist, gemäß dem Verfahrens nach einem der vorhergehenden Ansprüche, mit Druckerfassungssensoren (16), die mit den Druckleitungen (2) des Druckleitungsnetzes (1) jeweils an Knotenpunkten (P1, P2, .... Pn) des Druckleitungsnetzes stromauf und stromab eines jeden zu prüfenden aktiven Bauteils in Verbindung bringbar sind, einer Vergleichseinrichtung (18) zum Vergleich der erfassten Druckwerte (p1, p2, p3, ... pn) und/oder daraus abgeleiteter Werte mit Grenzwerten und einer Diagnoseeinheit (18) zur Diagnose von Funktionsstörungen eines jeden aktiven Bauteils anhand des Vergleichs, wobei eine Grenzwerteinrichtung zur Vorgabe der jeweiligen Grenzwerte in Abhängigkeit einer Ansteuergröße, mit der die Bremsanlage bzw. die aktiven Bauteile angesteuert werden, vorgesehen ist.

**7.** Vorrichtung nach dem vorhergehenden Anspruch, wobei eine Bremsprogrammeinrichtung (18) vorgesehen ist, die verschiedene Bremsprogramme vorgibt, bei denen verschiedene Ansteuergrößen für die Bremsanlage bzw. die aktiven Bauteile vorgegeben werden, wobei die Grenzwerteinrichtung derart ausgebildet ist, dass in Abhängigkeit der verschiedenen Ansteuergrößen verschiedene Grenzwerte für den durchzuführenden Vergleich vorgegeben werden, und wobei eine Einzelkomponentenprüfeinrichtung (18) vorgesehen ist, die die einzelnen aktiven Bauteile gesondert ansteuert, und die Grenzwerteinrichtung derart ausgebildet ist, dass sie entsprechend der Einzelansteuerung gesonderte Grenzwerte vorgibt, anhand derer die Vergleiche zwischen erfassten Druckwerten bzw. daraus abgeleiteten Werten und Grenzwerten durchführbar sind, wobei vorzugsweise ein Fehlererkennungslogik-Baustein (36) zur Bestimmung von Funktionsstörungen einzelner Bauteile anhand eines Systemzustands der Bremsanlage, der sich in Abhängigkeit einer definierten Ansteuerung der Bremsanlage einstellt, vorgesehen ist.

**8.** Vorrichtung nach einem der vorhergehenden Ansprüche, wobei die Drucksensoren (16) an die Knotenpunkte (P1, P2, P3... Pn) über Schnellkupplungen und/oder Rohrverschraubungen lösbar anschließbar sind, wobei die Drucksensoren (16) in einem zentralen Messadapter (17) zusammengefasst und über Stichleitungen an den Knotenpunkten anschließbar sind.

**9.** Vorrichtung nach einem der vorhergehenden Ansprüche, wobei die Diagnoseeinheit (18) eine Kennwertberechnungseinrichtung zur Berechnung eines Kennwerts (Q) aus zu einem Magnetventil gehörigen Ansteuerstrom und Druckwerten aufweist, wobei die Kennwertberechnungseinrichtung mit einer Speichereinrichtung verbunden ist, in der Kennwerte aus verschiedenen Prüfungen speicherbar sind, und eine Kennwert-Schätzeinrichtung (18) vorgesehen ist, die aus den gespeicherten Kennwerten anhand eines Modells, insbesondere durch Regressionsanalyse, einen sich zukünftig einstellenden Kennwert ableitet, wobei die Diagnoseeinrichtung (18) derart ausgebildet ist, dass eine Funktionsstörung angenommen wird, wenn der abgeleitete Kennwert jenseits eines vorgegebenen Grenzwerts ist.

**10.** Vorrichtung nach einem der vorhergehenden Ansprüche, wobei eine Leckageprüfeinrichtung vorgesehen ist, wobei die Leckageprüfeinrichtung Mittel zur Unterteilung des Druckleitungsnetzes (1) in einzelne Leckagekreise aufweist, wobei die Mittel zur Unterteilung vorzugsweise von im Druckleitungsnetz (1) angeordneten aktiven Bauteilen, insbesondere Hähnen, gebildet sind, wobei insbesondere eine Leckagemesseinrichtung (20), vorzugsweise ein Venturirohr (21), einen Differenzdrucksensor (22) und einen Temperatursensor (23) umfassend, vorgesehen und mit dem Druckleitungsnetz (1) verbindbar ist, und/oder wobei eine separat ansteuerbare Druckabsenkvorrichtung (24), vorzugsweise ein zusätzliches Magnetventil (25) umfassend, vorgesehen ist und mit dem Druckleitungsnetz (1) an einem Knotenpunkt vor und/oder nach einem Rückschlag- bzw. Doppelrückschlagventil (7, 8, 9) verbindbar ist.

Prinzip BremsdiagnoseSystem (Triebfahrzeug)

fig.1

**20**

**21** Venturirohr

**23** Temperatur-Sensor

**22** Differenzdruck-Transmitter

Leckagevorrichtung

Fig. 2

EP 1 288 095 A2

EP 1 288 095 A2

2

P3

Magnetventil 1     E1

6

3

7

P1     P2     P10

Druckminderventil 1

Doppelrückschlagventil 1

P6     P7

Druck-Transmitter

8

Magnetventil 2 (angesteuert durch Rechner)

25

24

Fig.3

Druckabsenkvorrichtung

P (bar)

B    I (A)

$Q = \int p(I)\, dp/dI$

A

(b)

Fig. 4

Normalzustand

I max

I (A)

P (bar)

P max

P min

I min

$Q^* = |P| x |I|$

(a)

Dynamische Charakteristik Magnetventil 1

| Signale / Knoten | Magnetventil 1 | | | | Doppelrückschlagventil 1 | | |
|---|---|---|---|---|---|---|---|
| | P 1 | E 1 | P 2 | | | P 6 | P 7 |
| **gemessen** | | | | | | | |
| P (t) (bar) | p1(t) | | p2(t) | | | P6(t) | P7(t) |
| I(t) (A) | | i1(t) | | | | | |
| $\Delta p/\Delta t$ | $(\Delta p/\Delta t)_1$ | | $(\Delta p/\Delta t)_2$ | | | $(\Delta p/\Delta t)_6$ | $(\Delta p/\Delta t)_7$ |
| $\Delta I/\Delta t$ | | $(\Delta I/\Delta t)_1$ | | | | | |
| **berechnet** | | | | | | | |
| Q | | | Q | | | | |

Legende: anstelle der Differenzenquotienten kann auch der Differentialquotient dp/dt und dI/dt treten.

**Matrix mit Systemzuständen**

Fig. 5

16

```
        ┌──────────────────┐
        │  Bremsdiagnose   │
        │    Programm      │
        └──────────────────┘
                 │
                 ▼
        ┌──────────────────┐
        │ Leckage Programm │
        └──────────────────┘
                 │
                 ▼
        ┌──────────────────┐
        │ Betriebsbremse   │
        │   Programm       │
        └──────────────────┘
                 │
                 ▼
        ┌──────────────────┐
        │ Haltebremse      │
        │   Programm       │
        └──────────────────┘
                 │
                 ▼
        ┌──────────────────┐
        │ Parkbremse       │
        │   Programm       │
        └──────────────────┘
                 │
                 ▼
        ┌──────────────────┐
        │ Fahrer notbrems  │
        │   Progr.         │
        └──────────────────┘
                 │
                 ▼
        ┌──────────────────┐
        │ Fahrgast notbrems│
        │   Progr.         │
        └──────────────────┘
                 │
                 ▼
        ┌──────────────────┐
        │ Notbremsschleife │
        │   Progr.         │
        └──────────────────┘
                 │
                 ▼
        ┌──────────────────┐
        │ Komponenten test │
        │   Progr.         │
        └──────────────────┘
                 │
                 ▼
        ┌──────────────────┐
        │       Ende       │
        └──────────────────┘
```

Fig. 6

Fig.7

Fig. 8

Fig. 9

Fig. 10

EP 1 288 095 A2

22

$y=(p_6-p_7)$ [bar]

2

S

0

-2

5    6    $x=p_8$ [bar]

(b)

$p_6, p_7$ [bar]

6

$p_7$

$p_6$

1

5    6    $x=p_8$ [bar]

(a)

Fig. 11

Fig. 12

Struktur Fehlererkennungslogik mit Beobachterbank